**Europäisches Patentamt**

**European Patent Office**

**Office européen des brevets**

(19)

(11) Veröffentlichungsnummer: **0 113 843**
**B1**

(12)

# EUROPÄISCHE PATENTSCHRIFT

(45) Veröffentlichungstag der Patentschrift:
**07.01.87**

(21) Anmeldenummer: **83111984.7**

(22) Anmeldetag: **30.11.83**

(51) Int. Cl.⁴: **B 01 D 29/02,** B 01 D 25/26

(54) **Plattenfilter mit bewegbarem Filtertuch.**

(30) Priorität: **17.12.82 DE 3246771**

(43) Veröffentlichungstag der Anmeldung:
**25.07.84 Patentblatt 84/30**

(45) Bekanntmachung des Hinweises auf die Patenterteilung:
**07.01.87 Patentblatt 87/2**

(84) Benannte Vertragsstaaten:
**AT BE CH DE FR GB IT LI LU NL SE**

(56) Entgegenhaltungen:
**DE - A - 1 954 490**
**DE - A - 2 012 400**
**DE - C - 2 853 952**

(73) Patentinhaber: **Eberhard Hoesch & Söhne GmbH & Co.,
Postfach 116, D-5160 Düren (DE)**

(72) Erfinder: **Schotten, Alfons, Rurstrasse 13, D-5160 Düren
(DE)**

(74) Vertreter: **Langmaack, Jürgen, Dipl.-Ing. et al,
Patentanwälte Maxton . Maxton . Langmaack
Goltsteinstrasse 93 Postfach 51 08 06,
D-5000 Köln 51 (DE)**

**Beschreibung**

Die Erfindung betrifft ein Plattenfilter mit einer Vielzahl in einem Gestell verschiebbar gelagerter Filterelemente, wobei abwechselnd ein plattenförmiges und ein rahmenförmiges Filterelement aufeinanderfolgen, die über eine Schliesseinrichtung zu einem Filterplattenpaket zusammenschiebbar und zusammenpressbar sind, bei der an zwei gegenüberliegenden Kanten der plattenförmigen Filterelemente Umlenkwalzen angeordnet sind, die zumindest zum Teil antreibbar ausgebildet sind und über die ein endloses, zickzackförmig zwischen den Filterelementen verlaufendes Filtertuch geführt ist und bei der Antriebseinrichtungen zum Durchzug des Filtertuchs bei geöffnetem Filterplattenpaket vorgesehen sind und wobei zumindest ein Teil der Umlenkwalzen an einer Seite des Filterplattenpaketes wenigstens an einem Ende mit einem fest verbundenen Zahnrad versehen ist, in das ein mehrere Zahnräder verbindendes, biegsames, formschlüssiges, endloses Antriebsmittel eingreift, das mit einem Antriebsmotor in Verbindung steht.

Ein Plattenfilter der vorstehend bezeichneten Art mit vertikal ausgerichteten Filterplatten ist aus der DE-AS 2012400 bekannt. Der Nachteil der bekannten Konstruktion besteht darin, dass beim Schliessen des Filterplattenpaketes das jeweils von unten an den Zahnrädern anliegende Kettenstück sich von diesen löst und frei nach unten durchhängt. Hinzu kommt noch, dass für den Antrieb der Filtertuchumlenkwalzen zwei sich kreuzende Ketten nebeneinander angeordnet sein müssen, so dass hier bei geschlossenem Plattenfilter jeweils versetzt nebeneinander nach unten durchhängende Kettenschlaufen gebildet werden. Der jeweils darunterliegende Rücklauftrum der beiden Kettenzüge ist über endständige Rollen auf dem feststehenden Endstück sowie auf dem verschiebbaren Kopfstück gelagert, so dass beim Schliessen des Plattenfilters diese beiden Rücklauftrume auf voller Länge ebenfalls durchhängen. Bei geschlossenem Filterplattenpaket, nahezu während des gesamten Öffnungsvorganges und nahezu während des gesamten Schliessvorganges sind weder der jeweilige Antriebstrum noch der jeweilige Rücklauftrum der Kettenzüge geführt, sondern es bilden sich frei durchhängende, nebeneinanderliegende Kettenschlaufen. Da nun insbesondere nach längerer Betriebszeit die üblicherweise als Antriebsmittel verwendeten Rollen- bzw. Laschenketten auch quer zu ihrer Gelenkebene auslenkbar sind, genügen schon geringe, während der Bewegungsvorgänge mit Sicherheit nicht zu vermeidende Erschütterungen, um hier Verhakungen der beide lose durchhängenden Kettentrume zu bewirken, die dann zu entsprechenden Störungen und Beschädigungen führen. Ein weiterer Nachteil dieser vorbekannten Einrichtung besteht darin, dass ein derartiger Filtertuchtransport nur für Plattenfilter mit vertikal ausgerichteten Filterplatten angewendet werden kann.

Aus der DE-PS 2853952 ist nun ein Filtertuchtransport bekannt, bei dem die als Antriebsmittel dienende Rollenkette über eine Kombination von je einem Zahnrad und einem Umlenkrad pro Filterelement so geführt ist, dass die Rollenkette unabhängig vom Öffnungszustand des Filterplattenpaketes, auch während der Öffnungs- bzw. Schliessbewegung mit den Zahnrädern und den Umlenkrollen in Verbindung bleibt. Ein Nachteil dieser Konstruktion liegt darin, dass die gesamte Antriebsleistung für den Filtertuchtransport über eine, allenfalls über zwei Rollenketten geführt werden muss, so dass die Antriebsketten entsprechend stark ausgebildet werden müssen. Die Anordnung von Mehrfachantrieben für grosse Filtereinheiten ist nicht möglich.

Der Erfindung liegt nun die Aufgabe zugrunde, den zuletzt erörterten Filtertuchtransport weiter zu entwickeln und in seiner Funktion zu vereinfachen.

Diese Aufgabe wird mit den Mitteln des kennzeichnenden Teils des Anspruchs 1 gelöst. Der Vorteil der erfindungsgemässen Lösung besteht darin, dass durch die vorgeschlagene Kombination von fest mit der Umlenkwalze verbundenem Zahnrad und axial hierzu lose laufendem Zahnrad eine erhebliche konstruktive Vereinfachung erreicht wird. Darüber hinaus wird zweckmässigerweise jedes der beiden parallel laufenden Antriebsmittel, vorzugsweise Rollenketten, durch einen eigenen Antriebsmotor angetrieben, so dass sich eine bessere Zugverteilung für das Filtertuch ergibt. Besonders vorteilhaft ist es hierbei, wenn der Antriebsmotor für das eine Antriebsmittel an einem Ende des Filterplattenpaketes und der Antriebsmotor für das parallel laufende andere Antriebsmittel am anderen Ende des Filterplattenpaketes angeordnet ist. Eine bevorzugte Ausgestaltung ist durch Anspruch 2 gekennzeichnet. Die Erfindung wird anhand schematischer Zeichnungen eines Ausführungsbeispiels näher erläutert. Es zeigen:

Fig. 1 eine Seitenansicht eines geneigt angeordneten Plattenfilters.

Fig. 2 in vergrössertem Massstab eine Seitenansicht der Kettenführung.

Fig. 3 eine Aufsicht auf die Kettenführung gemäss Fig. 2.

Fig. 4 die Lagerung der Zahnräder in grösserem Massstab.

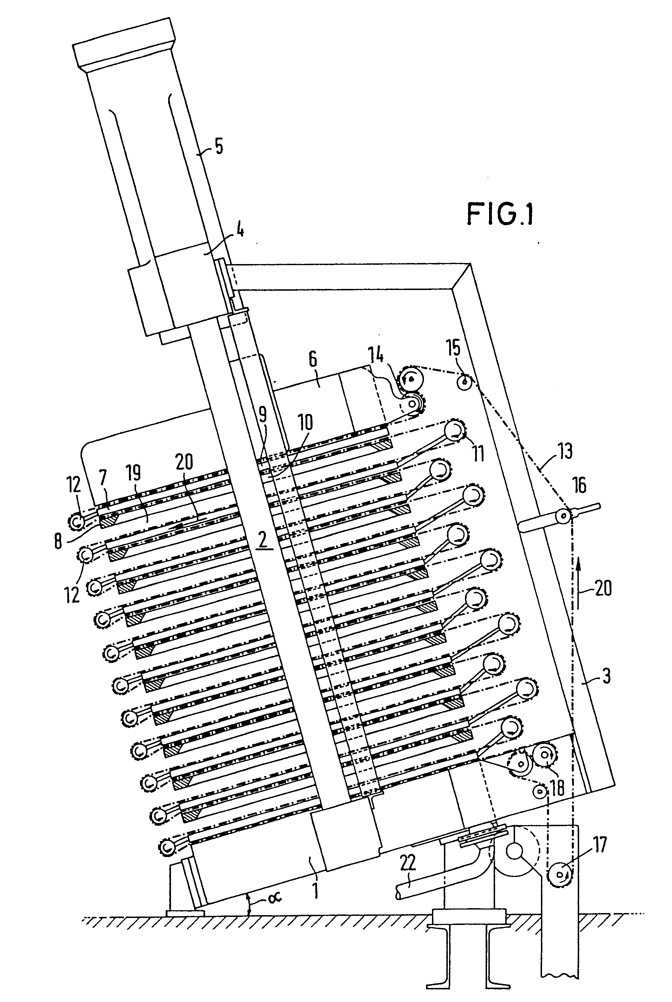

Wie die schematische Seitenansicht in Fig. 1 zeigt, ist ein Gestell vorgesehen, das eine starre Basisplatte 1 aufweist, die unter einem Winkel $\alpha = 15°$ gegenüber der Horizontalen geneigt ausgerichtet ist. Mit der Basisplatte 1 sind zu beiden Seiten Führungsträger 2 und an der erhöhten Seite entsprechende Gestellholme 3 fest verbunden, die am oberen Gestellende in ein gemeinsames Querjoch 4 zusammengeführt sind. Am Querjoch 4 ist ein hydraulisch wirkender Schliesszylinder 5 befestigt, dessen nicht sichtbare Kolbenstange mit der verschiebbaren Kopfplatte 6 in üblicher Weise verbunden ist.

Zwischen der Basisplatte 1 und der Kopfplatte 6 sind in Form eines Filterplattenpaketes die Filterelemente angeordnet, wobei abwechselnd ein plattenförmiges Filterelement 7, nachstehend Filterplatte genannt, und ein rahmenförmiges Filterelement 8, nachstehend Rahmen genannt, angeordnet sind. Die Filterelemente stützen sich über seitliche Führungsansätze 9, die als Gleitschuh ausgebildet sind, auf den beiden parallelen Führungsträgern 2 ab. In der Zeichnung ist das Filterplattenpaket in geöffnetem Zustand dargestellt, wobei zum besseren Verständnis die Rahmen 8 jeweils geschnitten dargestellt sind.

An den Filterplatten 7 sind an zwei gegenüberliegenden Seiten jeweils Umlenkwalzen 11 und 12 gelagert, wobei die in bezug auf die Neigung «oben» liegenden Walzen 11 einen grösseren Durchmesser aufweisen als die «unten» liegenden Walzen 12. Über diese Umlenkwalzen 11 und 12 ist ein endloses Filtertuch 13 zickzackförmig durch das Filterplattenpaket geführt, und zwar in der Weise, dass das Filtertuch 13 jeweils unmittelbar an der Oberseite und der Unterseite einer Filterplatte vorbei und jeweils zwischen einer Filterplatte 7 und einem Rahmen 8 hindurchgeführt ist.

Das Filtertuch 13 ist auf der in bezug auf den Neigungswinkel oben liegenden Seite des Filterplattenpaketes über eine Antriebsstation 14, Führungsrollen 15 und eine Reguliereinrichtung 16 sowie eine Spanneinrichtung 17 um das Filterplattenpaket herumgeführt. Von der Spanneinrichtung 17 läuft das Filtertuch 13 wieder über eine an der Basisplatte 1 gelagerte Antriebsstation 18 in das Filterplattenpaket zurück.

Die Filterplatten 7 und die Rahmen 8 sind untereinander in an sich bekannter Weise über eine Hängevorrichtung, beispielsweise in Form einer Laschenkette verbunden, die so ausgebildet ist, dass der Zwischenraum zwischen einer Filterplatte 7 und dem darunterliegenden Rahmen 8 gerade so gross ist, dass das Filterband frei hindurchgezogen werden kann, während der Abstand zwischen einem Rahmen 8 und der ihrerseits darunterliegenden nächsten Filterplatte 7 grösser ist als die Rahmendicke, so dass der durch die Rahmendicke in seiner Höhe vorgegebene Filterkuchen 19 bei einer Bewegung des Filterbandes in Richtung des Pfeiles 20 zwischen Rahmen 8 und der darunterliegenden Filterplatte 7 frei – in bezug auf die Neigung der Filterplatte – nach unten ausgetragen und auf ein nicht näher dargestelltes Fördermittel abgeworfen werden kann.

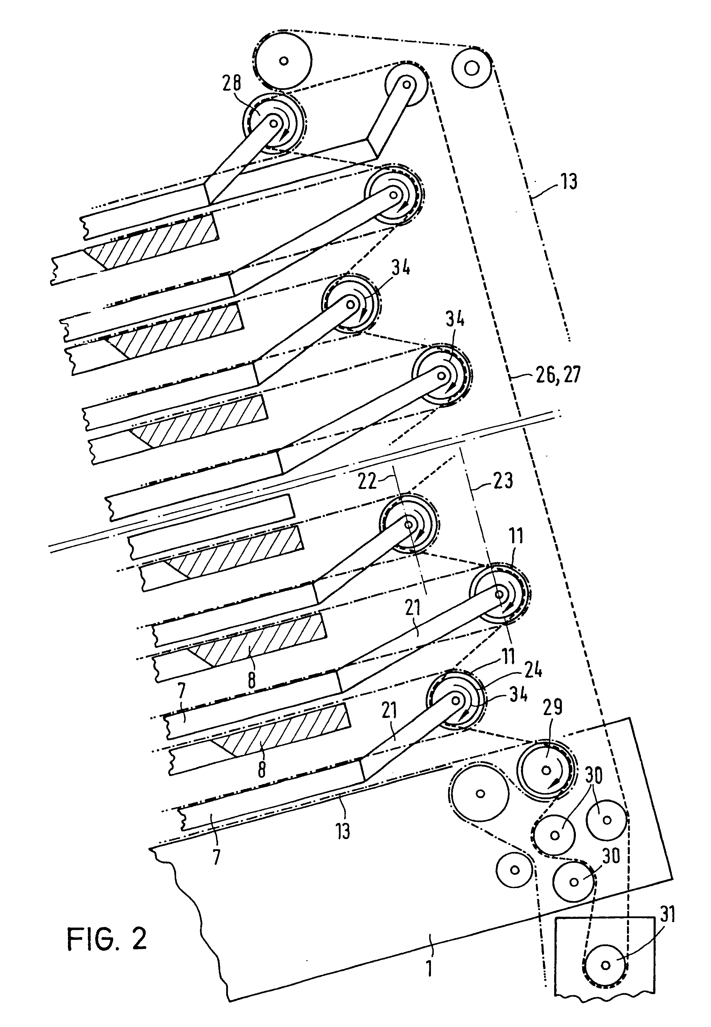

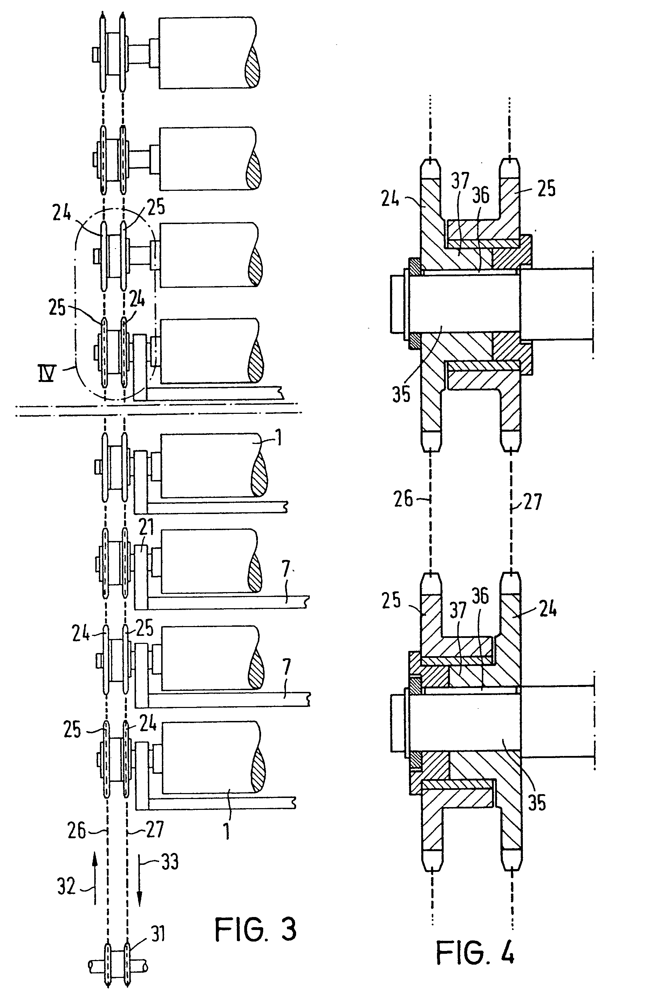

Der Filtertuchantrieb erfolgt nun in der in Fig. 2 und Fig. 3 näher angegebenen Weise. Wie aus der Seitenansicht gemäss Fig. 2 ersichtlich, sind die Umlenkwalzen 11 über entsprechende Haltearme 21 jeweils an einer Filterplatte 7 gelagert. Die Anordnung ist hierbei so vorgesehen, dass die Achsen aufeinanderfolgender Umlenkwalzen abwechselnd in zwei parallel zueinander verlaufenden Ebenen 22 und 23 liegen. Mit jeder Umlenkwalze 11 ist ein Zahnrad 24 fest verbunden und koaxial hierzu ein zweites Zahnrad 25 lose laufend zugeordnet (Fig. 3). Der Abstand der beiden Ebenen 22 und 23 ist nun grösser als der Durchmesser eines Zahnrades 24 bzw. 25, so dass beim Zusammenschieben des Filterplattenpaketes sich die Zahnräder der Ebene 22 an den Zahnrädern der Ebene 23 vorbeischieben können.

Wie aus der Aufsicht gemäss Fig. 3 ersichtlich, sind nun an den aufeinanderfolgenden Umlenkwalzen die fest mit den Umlenkwalzen verbundenen Zahnräder 24 und die zugehörigen lose laufenden Zahnräder 25 so angeordnet, dass in Längsrichtung gesehen hintereinander jeweils auf ein fest verbundenes Zahnrad ein lose laufendes Zahnrad folgt. Wie aus Fig. 2 und 3 ersichtlich, sind nun zwei parallel nebeneinanderlaufende Rollenketten 26 und 27 vorgesehen, die gleichsinnig zickzackförmig die Zahnräder der aufeinanderfolgenden Umlenkwalzen 11 umschlingen. Die Rollenketten 26 und 27 sind jeweils im Endbereich des Filterplattenpaketes über eine mit einem Antriebsmotor verbundene Antriebswalze 28 und 29 geführt. Der Leertrum der beiden nebeneinanderlaufenden Rollketten 26 und 27 ist über Umlenkritzel 30 sowie ein gewichts- oder federbelastetes Spannritzel 31 geführt. Die beiden Antriebswalzen 28 und 29, über die gleichzeitig das Filtertuch 13 geführt ist, werden nun gleichsinnig angetrieben. Da jedoch die den Antriebswalzen 28 und 29 zugeordneten Zahnräder auf unterschiedlichen Seiten mit der Rollenkette in Eingriff stehen, ergibt sich trotz der gleichsinnigen Drehung der beiden Antriebswalzen 28 und 29 eine gegensinnige Bewegung der beiden parallel nebeneinander geführten Antriebsketten 26 und 27. Die aussen liegende Kette 26 bewegt sich hierbei in Richtung des Pfeiles 32, währen die innen liegende Kette 27 sich in Richtung des Pfeiles 33 bewegt. Aufgrund der vorgegebenen Zuordnung von lose laufendem Zahnrad und fest mit der jeweiligen Umlenkwalze 11 verbundenem Zahnrad ergibt sich somit für alle Umlenkwalzen eine gleichsinnige Drehung in Richtung der Pfeile 34 und damit ein gleichgerichteter Durchzug des Filtertuches 13.

Aus Gründen der einfacheren Darstellung ist das Filtertuch in Fig. 2 jeweils nur im Endbereich des Filterplattenpaketes gezeigt.

Der Abstand der beiden Ebenen 22 und 23 zueinander sowie der Durchmesser der Zahnräder 24 bzw. 25 ist nun so aufeinander abgestimmt, dass bei einem Zusammenschieben des Filterplattenpaketes sich die jeweils in der Ebene 22 liegenden Zahnräder neben die Zahnräder der Ebene 23 schieben. Bei entsprechender Dimensionierung der Durchmesser und der Abstände vergrössert sich somit der Umschlingungswinkel der Ketten um die Zahnräder von etwa 136°, wie hier dargestellt, auf mehr als 180°, d. h., die jeweils zwischen zwei benachbarten Zahnrädern vorhandenen Längen der Ketten 26 bzw. 27 werden beim Zusammenschieben des Filterplattenpaketes «aufgewickelt» und beim Öffnen des Filterplattenpaketes von den Zahnrädern «abgewickelt». Diese «wickelbare» Länge der Ketten entspricht hierbei praktisch der durch die Distanzelemente vorgegebenen Weite zwischen je zwei Filterplatten, so dass weder beim Öffnungsvorgang noch beim Schliessvorgang ein Drehmoment auf die Umlenkwalzen eingeleitet wird. Dies ist deshalb wichtig, weil beim Öffnen des Filterplattenpaketes, beginnend mit der obenliegenden Kopfplatte, die einzelnen durch Distanzelemente miteinander verbundenen Filterelemente nacheinander ziehharmonikaartig voneinander getrennt werden. Da bei diesem Vorgang ein Teil der Filtertuchlänge noch eingeklemmt ist, während der andere Teil der Filtertuchlänge bereits freiliegt, dürfen auf die antreibbaren Umlenkwalzen keinerlei Zwangskräfte einwirken, da dies zu örtlichen Überdehnungen des Filtertuches führen würde. Dies ist durch den vorbeschriebenen Vorgang des «Aufwickelns» bzw. «Abwickelns» im Lasttrum der Ketten 26 und 27 vermieden.

Der Längenausgleich des Leertrums der Ketten 26 und 27 beim Öffnen und Schliessen erfolgt über das feder- bzw. gewichtsbelastete Spannritzel 31. Anstelle der beschriebenen Rollenketten können als Antriebsmittel auch Zahnriemen vorgesehen sein.

Wie aus der Zeichnung gemäss Fig. 2, die den Filtertuchtransport für ein Plattenfilter mit übereinander angeordneten Filterplatten zeigt, kann der Filtertuchtransport auch in gleicher Weise für ein Plattenfilter eingesetzt werden, bei dem die einzelnen Filterelemente nebeneinander, d. h. vertikal ausgerichtet, im Gestell angeordnet sind. Zweckmässigerweise werden sowohl für Plattenfilter mit vertikal ausgerichteten Filterplatten wie auch für Plattenfilter mit horizontal oder, wie dargestellt, geneigt ausgerichteten Filterplatten jeweils an beiden Enden einer Umlenkwalze jeweils ein festes und ein lose laufendes Zahnrad angeordnet, so dass jede Umlenkwalze jeweils über eine Kette an je einem Walzenende angetrieben wird.

In Fig. 4 ist ferner in einem Teilschnitt für zwei benachbarte Umlenkwalzen die Lagerung der Zahnräder 24 und 25 in grösserem Massstab dargestellt. Hierbei ist jeweils das unmittelbar auf einem Ansatz 35 der jeweiligen Umlenkwalze angeordnete Zahnrad 24 drehfest, beispielsweise über einen Keil 36, mit dem Ansatz 35 verbunden. Das lose laufende Zahnrad 25 ist jeweils frei drehend auf einem Bund 37 des festen Zahnrades 24 gelagert. Die Darstellung gemäss Fig. 4 ist durch den Bereich IV in Fig. 3 gekennzeichnet.

Statt der beschriebenen Ausführungsform kann die Erfindung auch dadurch verwirklicht werden, dass jeweils an einer Umlenkwalze das mit ihr fest verbundene Zahnrad 24 an einem Walzenende und das lose gelagerte Zahnrad 25 am anderen Walzenende angeordnet ist. Hierbei müssen dann jeweils an einer Seite in bezug auf das Antriebsmittel ein fest mit einer Umlenkwalze verbundenes Zahnrad 24 und ein lose gelagertes Zahnrad 25 aufeinanderfolgen.

**Patentansprüche**

1. Plattenfilter mit einer Vielzahl in einem Gestell verschiebbar gelagerten Filterelementen, wobei abwechselnd ein plattenförmiges (7) und ein rahmenförmiges (8) Filterelement aufeinanderfolgen, die über eine Schliesseinrichtung zu einem Filterplattenpaket zusammenschiebbar und zusammenpressbar sind, bei der an zwei gegenüberliegenden Kanten der plattenförmigen Filterelemente (7) Umlenkwalzen (11, 12) angeordnet sind, die zumindest zum Teil antreibbar ausgebildet sind und über die ein endloses, zickzackförmig zwischen den Filterelementen verlaufendes Filtertuch (13) geführt ist, und bei der Antriebseinrichtungen zum Durchzug des Filtertuches bei geöffnetem Filterplattenpaket vorgesehen sind und wobei zumindest ein Teil (11) der Umlenkwalzen (11, 12) an einer Seite des Filterplattenpaketes wenigstens an einem Ende mit einem fest verbundenem Zahnrad (24) versehen ist, in das ein mehrere Zahnräder verbindendes, biegsames, formschlüssiges, endloses Antriebsmittel (26, 27) eingreift, das mit einem Antriebsmotor in Verbindung steht, dadurch gekennzeichnet, dass die Umlenkwalzen (11) jeweils an den aufeinanderfolgenden plattenförmigen Filterelementen (7) so angeordnet sind, dass die Achsen aufeinanderfolgender Umlenkwalzen (11) abwechselnd in zwei parallel zueinander verlaufenden Ebenen (22, 23) liegen, deren Abstand zueinander grösser ist als der Durchmesser der zugehörigen Zahnräder (24, 25), dass an jeder Umlenkwalze (11) zusätzlich zu dem festverbundenen Zahnrad (24) koaxial ein zweites, lose laufendes Zahnrad (25) angeordnet ist, dass dem lose laufenden Zahnrad (25) einer Umlenkwalze (11) – in bezug auf ein Antriebsmittel – das fest verbundene Zahnrad der jeweils benachbarten Umlenkwalze (11) zugeordnet ist und dass die beiden Zahnräder (24, 25) jeder Umlenkwalze (11) jeweils mit einem formschlüssigen Antriebsmittel (26, 27) in Verbindung stehen und dass die Antriebsmittel (26, 27) die Zahnräder (24, 25) der aufeinanderfolgenden Umlenkwalzen (11) zickzackförmig umschlingen, dass der Abstand der beiden Umlenkwalzenebenen (22, 23) und der Durchmesser der Zahnräder (24, 25) so bemessen ist, dass der Längenausgleich der Antriebsmittel (26, 27) bei einer Verschiebung der Filterelemente (8) durch eine Veränderung der Umschlingung der Zahnräder (24, 25) durch das Antriebsmittel erfolgt und dass die beiden Antriebsmittel (26, 27) gegenläufig angetrieben sind.

2. Plattenfilter nach Anspruch 1, dadurch gekennzeichnet, dass die beiden Zahnräder (24, 25) unmittelbar nebeneinander an jeder Umlenkwalze (11) angeordnet sind und dass die lose laufenden Zahnräder (25) der einen Umlenkwalzenebene (23) aussenliegend und die der anderen Umlenkwalzenebene (22) innenliegend neben dem fest mit den Umlenkwalzen (11) verbundenen Zahnrädern (24) gelagert sind.

**Claims**

1. Plate filter with a plurality of filter elements slidably mounted in a stand, a plate-shaped filter element (7) and a frame-shaped filter element (8) following each other alternately, which elements can be pushed and pressed together via a closing device to form a filter plate packet, in which deflection rollers (11, 12) are arranged at two opposing edges of the plate- shaped filter elements (7), and are constructed at least partially so as to be drivable, and over which a continuous filter cloth (13) is guided, which runs in a zigzag form between the filter elements, and in which driving devices are provided for drawing of the filter cloth throgh when the filter plate packet is opened, and at least some (11) of the deflection rollers (11, 12) being provided on one side of the pack of filter plates at least at one end with a fixedly connected cogwheel (24) into which there engages a flexible, form-locking, continuous driving means (26, 27) connecting several cogwheels, which means is connected with a driving motor, characterised in that the deflection rollers (11) are arranged in each case on the successive plate-shaped filter elements (7) such that the axes of successive deflection rollers (11) lie alternately in two planes (22, 23) which run parallel to each other, the spacing one from the other being greater than the diameter of the associated cogwheels (24, 25), that on each deflection roller (11) in addition to the fixedly connected cogwheel (24) a second, loosely running cogwheel (25) is coaxially arranged, that associated with the loosely running cogwheel (25) of a deflection roller (11) – in relation to a driving means – there is associated the fixedly connected cogwheel of the respectively adjacent deflection roller (11) and that the two cogwheels (24, 25) of each deflection roller (11) are connected in each case with a form-locking driving means (26, 27) and that the driving means (26, 27) wind around the cogwheels (24, 25) of the successive deflection rollers (11) in a zigzag form, that the distance between the two deflection roller planes (22, 23) and the diameter of the cogwheels (24, 25) is dimensioned such that the longitudinal compensation of the driving means (26, 27) on a displacement of the filter elements (8) takes place through a change in the winding around of the cogwheels (24, 25) by the driving means and that the two driving means (26, 27) are driven in opposite directions.

2. Plate filter according to claim 1, characterised in that the two cogwheels (24, 25) are arranged immediately adjacent to each other on each deflection (11) and that the loosely running cogwheels (25) lying on the outside of the one deflection roller plane (23) and those lying on the inside of the other deflection roller plane (22) are mounted adjacent to the cogwheels (24) which are fixedly connected with the deflection rollers (11).

**Revendications**

1. Filtre à plaques comprenant une série d'éléments de filtre qui sont montes de manière à pouvoir coulisser dans un bâti, avec une succession alternée d'un élément de filtre en forme de plaque (7) et d'un élément de filtre en forme de cadre (8), et qui peuvent être repoussés, de manière coulissante, et pressés les uns contre les autres, pour former un paquet de plaques de filtre, à l'aide d'un dispositif de fermeture, tandis que sont prévus sur deux chants opposés des éléments de filtre en forme de plaque (7) des cylindres de renvoi (11, 12) qui sont agencés, au moins pour partie, de manière à pouvoir être entraînés et par-dessus lesquels est guidé un tissu filtrant (13) sans fin et passant en forme de zig-zag entre les éléments de filtre, des dispositifs d'entraînement étant prévus pour appliquer une traction sur le tissu filtrant lorsque le paquet de plaques de filtre est ouvert et au moins une partie (11) des cylindres de renvoi (11, 12) étant munis, sur un côté du paquet de plaques de filtre et au moins à une extrémité, d'une roue dentée à liaison fixe (24) avec laquelle engrène un moyen d'entraînement (26, 27) souple, sans fin et de forme complémentaire, qui relie plusieurs roues dentées et qui se trouve en liaison avec un moteur d'entraînement, caractérisé en ce que les cylindres de renvoi (11) sont à chaque fois disposés sur les éléments de filtre en forme de plaques qui se succèdent (7) de manière telle que les axes de cylindres de renvoi successifs (11) se trouvent de manière alternée dans deux plans s'étendant parallèlement l'un à l'autre (22, 23) dont l'espacement l'un par rapport à l'autre est supérieur au diamètre des roues dentées associées (24, 25), en ce qu'il est prévu sur chaque cylindre de renvoi (11), en plus de la roue dentée reliée à demeure (24) et de manière coaxiale, une seconde roue dentée tournant folle (25), en ce qu'est associée à la roue dentée tournant folle (25) d'un cylindre de renvoi (11) – en se référant à un moyen d'entraînement – la roue dentée à liaison fixe du cylindre de renvoi (11) à chaque fois voisin, et en ce que les deux roues dentées (24, 25) de chaque cylindre de renvoi (11) se trouvent à chaque fois en liaison avec un moyen d'entraînement de forme complémentaire (26, 27), et en ce que les moyens d'entraînement (26, 27) s'enroulent en forme de zig-zag sur les roues dentées (24, 25) des cylindres successifs de renvoi (11), en ce que l'espacement des deux plans (22, 23) des cylindres de renvoi et le diamètre des roues dentées (24, 25) sont dimensionnés de façon que la compensation de longuer des moyens d'entraînement (26, 27) lors d'un déplacement en coulissement des éléments de filtre (8) se réalise à l'aide d'une modification de l'enroulement du moyen d'entraînement sur les roues dentées (24, 25), et en ce que les deux moyens d'entraînement (26, 27) sont entraînés dans des sens opposés.

2. Filtre à plaques selon la revendication 1, caractérisé en ce que les deux roues dentées (24, 25) sont disposées sur chaque cylindre de renvoi (11) directement l'une à côté de l'autre et en ce que les roues dentées tournant folles (25) de l'un des plans (23) de cylindres de renvoi sont montés extérieurement, et celles de l'autre plan (22) de cylindres de renvoi intérieurement, à côté des roues dentées (24) reliées à demeure aux cylindres de renvoi (11).

FIG.1

FIG. 2

0113843

9

FIG. 3

FIG. 4

11